# EUROPEAN PATENT SPECIFICATION

(11) **EP 3 096 424 B1**
(45) Date of publication and mention of the grant of the patent: **13.02.2019**
(21) Application number: 15382265.5
(22) Date of filing: 21.05.2015
(51) Int. Cl.: H02G 3/12

(54) **FLEXIBLER KLAUENGRIFF ZUM BEFESTIGEN EINES ELEMENTES IN EINER BOX UND MIT DIESEM KLAUENGRIFF ZU BEFESTIGENDES ELEMENT**
FLEXIBLER KLAUENGRIFF ZUM BEFESTIGEN EINES ELEMENTES IN EINER SCHACHTEL UND MIT DIESEM KLAUENGRIFF ZU BEFESTIGENDES ELEMENT
POIGNÉE À GRIFFE SOUPLE DE FIXATION D'UN ÉLÉMENT DANS UNE BOÎTE ET ÉLÉMENT À FIXER PAR LADITE GRIFFE

(43) Date of publication of application: 23.11.2016
(73) Proprietor: Simon, S.A.U., 08013 Barcelona (ES)
(72) Inventor: Villalobos Cortes, Felix, 08013 Barcelona (ES); Fusté Pardo, Carlos, 08013 Barcelona (ES); Arderiu Costas, Jordi, 08013 Barcelona (ES)
(74) Representative: Espiell Volart, Eduardo Maria

(56) References cited:
- EP-A1- 1 538 718
- DE-A1- 2 050 842
- DE-A1- 19 602 151
- DE-A1- 19 735 703

## Description

### OBJECT OF THE INVENTION

The invention, as stated in the heading of this description, relates to a flexible claw grip for fastening an element in a box and the fastening system that includes the element to be fixed which said claw grips, both of which provide benefits and characteristics inherent to their particular configuration, to be described in more detail below and which represent an improvement in the current state of the art.

### FIELD OF APPLICATION OF THE INVENTION

The field of application of the invention falls within the industrial sector dedicated to the manufacture of electric and electronic mechanisms, devices and accessories.

### BACKGROUND OF THE INVENTION

It is known that elements that require fixing, for example electric and electronic devices or their supports, which are installed in a box, are fixed in two ways. In the first case, the box, in which they are housed, has a series of housings for screws, and the element to be fixed is fixed to the box by these screws.

In the second mode, the fixing to the box is achieved by means of a system of rigid claws.

These claws consist of rigid elements which emerge laterally from the body of the element to be fixed, and are fixed to the walls of the box through pressure by tightening the screws that cause the opening of the claws in the direction of the internal walls of the box.

With this solution, in the face of potential movements of the body of the element to be fixed inside the box, which are very frequent for example when said element to be fixed is a socket, the fastening weakens and the pressure of the claws loses strength. Also, with the described inclination of the claws, the movement and force of the extraction, of a plug from a socket for example, can cause the body of the element to be fixed to come out from its location inside the box.

Another drawback is the necessary use of tools, for both installation and disassembly, along with the fact that each claw is fixed independently with its corresponding screw, which causes difficulties in correctly balancing the position of the element to be fixed, as the pressure exerted by the screws can be different.

The need for tools to use it is evident from Spanish utility model number ES0141871 U whose owner is the applicant in question. This document discloses a fixing element for electric devices characterized in that one of the sides of it is disposed on respective external and opposite mortises provided in the bottom of the single-block base body of the device in question, in such a way that the other side of these elements is left in a divergent position in relation to the walls of the aforesaid base body and to the mouth of the flush-mount box in which it is to be housed, and once the assembly is coupled in the flush-mount box, the screws which act on these elements are acted on to make their angle of divergence increase until butting against the walls of the embedded box, in such a way that any tensile stress exerted on the device to remove it from the embedded box translates into an increase in the pressure of the fixing elements on the walls of the aforesaid box. This invention requires screws for its correct operation, a circumstance which it is desirable to avoid.

To solve these drawbacks, the applicant is the holder of Spanish patent application number 201430007 and European patent application EP14382237 claiming the priority of the Spanish patent which describes a "Flexible claw grip for fastening an element in a box and an element to be fixed by said claw", wherein the claw, applicable to electric devices and/or to the supports for said devices, being intended to provide securing of said devices or supports to a box is configured essentially on the basis of, at least one part with, at least, one flexible part and at least one distal part and in which, once placed in the element to be fixed, a first horizontal projection between the point where the claw joins the element to be fixed and the distal end of the claw is larger than a second horizontal projection between the same point where the claw joins the element to be fixed and the internal wall of the box, whereby, the claw juts out and, on being incorporated in the box bends and anchors to the walls of the box without the need for screws, by its distal end exerting pressure on the internal walls of the box.

This claw, which can be integrated in the very element to be fixed or be a separate piece from it, has preferably, means of attachment on the distal end which improve the grip of same with the internal walls of the box, which consist of serrations, claws or edges which act as a hook, becoming further embedded in the internal wall of the box if the element to be fixed is pulled outwards, increasing the strength required for extraction thereof.

Also, the claw, at its distal end, presents a grip surface to easily release and extract the element to be fixed, in which there is a hole for inserting a tool to carry out said extraction operation.

For its part, the element to be fixed by the aforementioned claw has at least one opening so that said grip surface of the claw can have more space for the action of disengaging it.

DE19602151 shows a backing box for a switch or socket with an insert with fastening claws, made of spring steel, ending in points around the outside. The points of different claws, when unstressed, are spaced apart from each other by more than the width of the box (4). The claws have to be released by a tool once the insert is pushed into the box.

Therefore, the object of the present invention is to develop an improved new claw and new element to be fixed by said claw, as, although the described solution satisfactorily meets the pursued objectives of improving the prior state of the art, there are certain aspects that can be improved even more effectively, referring, principally to the configuration of the means of attachment in the form of serrations, claws or edges on the distal end of the claw, and also to the means for carrying out the extraction operation of same.

The essential problem intended to be solved by means of said invention is related to the fact that normally, between the element to be fixed and the bottom of the box the electrical or communication wires tend to accumulate forming loops which cause an effect of pushing against said element, making it floats on them due to the flexibility of the aforesaid claw. This effect, if the means of attachment of the distal end of the claw are not sufficiently effective, can lead to a movement of the element to be fixed, giving the sensation that it does not be well fixed.

Another problem arises from the fact that in some places it is customary to embed the box, instead of flush with the wall, somewhat recessed, which makes it necessary to modify the means of attachment to better adapt them to the deeper position of the box, avoid poor engagement with it by said means of attachment.

### EXPLANATION OF THE INVENTION

Therefore, what the invention proposes, as already pointed out above, is a flexible claw grip for fastening an element in a box and the element to be fixed by said claw and which, with the claw intended to be incorporated either in a unitary manner or in assembled mode, is of the type which presents a flexible structural configuration which makes it suitable for achieving the fixing of the element to be fixed to the box in which it is inserted simply by pressure and without requiring the use of tools.

Specifically, the claw in an already known manner is configured on the basis of at least one part with at least one flexible part wherein, once placed in the element to be fixed in a box, the distance between the point where the claw joins the element to be fixed and the internal wall of the box is less than the projection of the distance between the same claw joining point and the distal end of the claw.

Moreover, the claw, which can be integrated in the element to be fixed or which may be an separate part from the element, has means of attachment on the distal end of same which consist of serrations, claws or edges which act as a hook, becoming further embedded in the inner wall of the box on applying force in an outwards direction, these being configured, innovatively, in a stepped manner by which they determine, at least, two different levels of engagement on each distal end of the claw, said levels being preferably three.

This stepped configuration provides a very noticeable increase in the security of the attachment, and consequently, a greater capacity to avoid the floating effect of the element to be fixed caused by the potential pushing of the cables existing between the latter and the bottom of the box.

At the same time, by having different levels of engagement on each distal end of the claw, a greater grip surface is also provided so that the same type of claw or of the element to be fixed with the claw integrated serves for both boxes that are flush-mounted with the wall and for boxes which are more recessed.

Continuing with the particularities of the claw of the invention, it must be pointed out that the aforesaid means of attachment of the distal end, consisting of serrations, claws or edges which constitute the different levels, are provided in the two sides of each end of the claw, being determined by the fold of the very material, specifically the fold of the plate used for its manufacture, which awards increased rigidity and resistance to effort of the grip and locking system of the means of attachment.

According to another characteristic of the invention, the claw of the invention has at least one longitudinal groove, preferably two, in each distal end of the claw, which fits onto a respective longitudinal protrusion disposed to such effect in the element to be fixed, forming the fastening system (element + claw), the purpose of which is to provide improved rigidity to transversal movements or torque that the claw may receive, and also improves the attachment between the claw and the element to be fixed, especially when the claw is separate from the element to be fixed, but in all events without preventing the bending of the distal end of said claw.

Finally, the invention provides for the existence of at least one through hole located in the side of the internal part of the element to be fixed, which gives access to the top part of the claw, in the proximal zone of its distal end, allowing for easy insertion of a tool to press on said part of the claw, once inserted in the box and ensure the grip of same without having to press on the element to be fixed, which is not always appropriate or might damage the element in question. In the preferred embodiment, the element to be fixed will have one of said through holes in correspondence with each one of the distal ends of the claw to be able to press on all of them.

### DESCRIPTION OF THE DRAWINGS

To complement the description and with a view to contributing to a better understanding of the characteristics of the invention, a set of drawings is attached to this description, as an integral part of same, which by way of illustration but not limitation represent the following:
- Figure 1.:: Shows an exploded view in perspective of an example of a preferred embodiment of the flexible claw grip, the element which said claw is designed to fix and the box in which it is secured, in which the main parts and elements it comprises can be clearly observed;
- Figure 2.:: Shows an elevation section view of the claw joined to the element to be fixed and of the box according to the example of the invention shown in figure 1, in a position prior to being inserted in same, and in an assembly option wherein the box is installed flush-mounted with the wall;
- Figure 3.:: Shows an elevation section view of the elements represented in figure 2, once fixed inside the box, showing the way in which the means of attachment act with different levels of anchoring of the distal ends of the claw;
- Figure 4.:: Shows a similar view to that of figure 3, in this case representing an assembly option with the box more deeply recessed into the wall;
- Figure 5.:: Shows a partial view from a bottom perspective of the flexible claw grip joined to the element to be fixed, forming the fastening system, noting the coupling of the longitudinal grooves of the claw to the protrusions of the element to be fixed;
- Figure 6.:: Shows an enlarged view of detail A marked on figure 5, to observe with greater clarity the aforesaid coupling of the grooves with the longitudinal protrusions;
- Figure 7.:: Shows a top view in perspective of a sectioned portion of the element to be fixed in which the lower internal part of the element to be fixed can be observed where it has through holes to be able to press on the claw, and finally;
- Figure 8.:: Shows an enlarged view of detail B marked on figure 7, to observe one of the aforesaid through holes and the surface of the claw to which it gives access.

### PREFERRED EMBODIMENT OF THE INVENTION

In the light of the above drawings and in accordance with the adopted numbering, it is possible to appreciate from them a non-limiting example of embodiment of the flexible claw grip for fastening an element in a box and the element to be fixed by said claw, according to the invention, wherein said element can be electric or electronic devices and supports, comprising the parts and elements indicated and described in greater detail below.

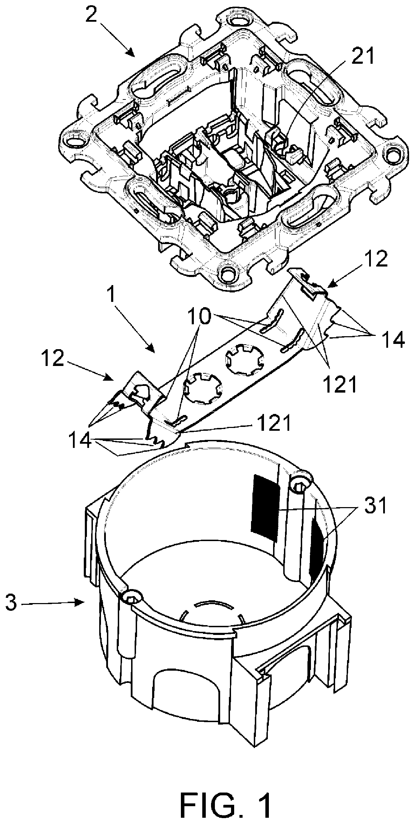

Thus, as observed in figure 1, the claw grip (1) of the invention, applicable to provide the fastening of an element to be fixed (2) in a box (3) of the type that is embedded in a wall, is configured on the basis of, at least, one part with, at least one flexible part determined by a distal end (12) whose horizontal projection, once joined to said element (2) is greater than the space it occupies when placed in the box (3) and which, consequently, applies pressure to the internal wall of said box (3) caused by the elastic energy accumulated through bending of the claw grip (1) during the installation.

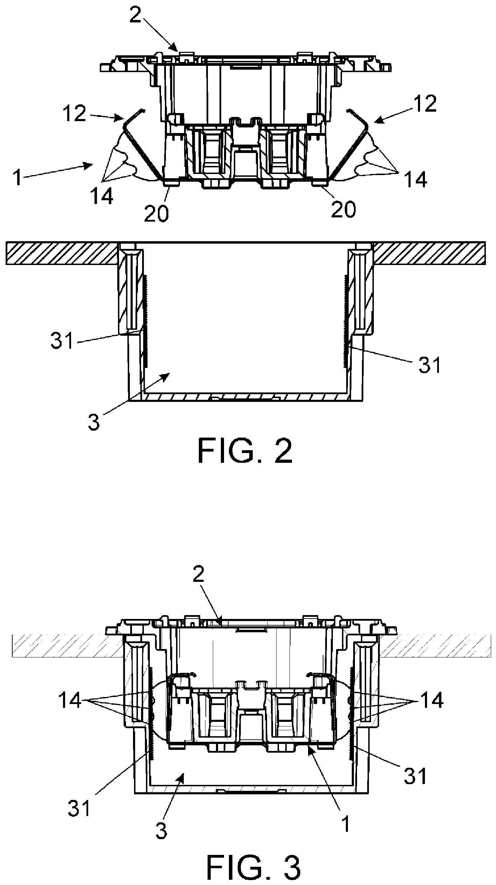

Said distal end (12), two in opposite points in the example shown in figures 1 to 8, also presents means of attachment (14) which improve the grip of same with the internal walls of the box (3) which, consisting of serrations, claws or edges, according to the essential characteristic of the claw grip (1) are disposed in a stepped manner, in other words, at different heights and furthermore in this example, one above the other, creating, at least, two different levels of engagement on the internal wall of the box (3), which, optionally, can be provided with a grooved surface (31) transversally coinciding with the point of incidence of the aforesaid means of attachment (14) in said engagement with a view to increasing the effect of same, the different levels of engagement they determine preferably being three, as can be clearly appreciated in figures 1 and 2.

Continuing with the particularities of the claw grip (1), it is worth noting that preferably, the means of attachment (14) of the distal end (12) are provided in respective sides of said distal end (12), forming two parallel segments of means of attachment (14) with different levels of engagement, said parallel segments being determined also in a preferred manner, by respective folds (121) of the very material constituting the claw at said distal end (12), specifically of the fold of the plate used to form it.

Figures 2 and 3 represent the claw grip (1) joined to the element to be fixed (2) before its incorporation and after its incorporation into the box (3) showing the way in which the means of attachment (14) act with different levels of anchoring on the grooved surface (31) of the internal wall of the box (3), in an assembly option of same embedded flush with the wall, noting the anchoring of said means in an intermediate zone of said grooved surface (31).

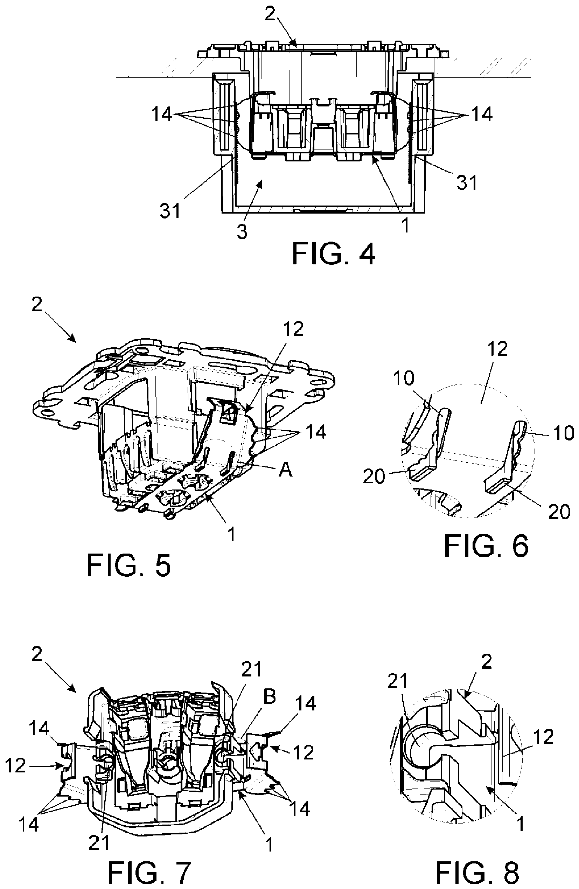

Figure 4 shows another example of assembly of the box (3) further recessed from the flush line of the wall, noting how the means of attachment (14) with different levels of anchoring touch, in this case, a higher point above the grooved surface (31) of the internal wall of the box (3), showing that they continue to act effectively by having said levels of anchoring presented by the repeated means of attachment (14).

Thus it can be appreciated how said means of attachment (14) of each distal end (12) of the claw grip (1) are provided to be left with all their stepped levels matching the grooved surface (31) transversally provided in the internal wall of the box (3), irrespective of the way in which said box (3) is embedded in the wall.

Referring to figures 5 and 6, it is possible to observe how the claw grip (1) of the invention presents longitudinal grooves (10), i.e., following the longitudinal axis of the projection of each distal end (12) of the claw grip (1), preferably contemplating two longitudinal grooves (10) in each distal end (12), which engage with respective longitudinal protrusions (20) provided to this effect and coinciding in the element to be fixed (2), for the purpose of providing a coupling between the claw grip (1) and the element to be fixed (2) which prevents movements in the opposite direction, in other words, which prevents transversal and rotational movements between the distal end (12) of the claw grip (1) and the element to be fixed (2).

For an improved coupling between the claw grip (1) and the element to be fixed (2), it has been contemplated that at least one of the walls of the aforesaid longitudinal grooves (10) is serrated.

Finally, figures 7 and 8 show the existence of, at least, one through hole (21) in the element to be fixed (2) which gives access to the upper surface of the claw grip (1), when the latter is joined to said element, for the purpose of allowing the insertion of a tool (not represented) to be able to press on said surface of the claw grip (1) and to be able to reassure the claw's grip once inserted in the box (3).

To do this, said through hole (21) is located on the side of the inner part of the element to be fixed (2), coinciding with the proximal zone of each distal end (12) of the claw grip (1), in other words, the most distal zone of the element to be fixed (2) which coincides with the claw grip (1), with there being, therefore, a through hole (21) in correspondence with each one of the distal ends (12) of the claw grip (1).

## Claims

1. Flexible claw grip for fastening an element in a box, applicable to provide the fixation of an element fixable (2) in a box (3), and configured on the basis of, at least, one part with, at least, one flexible part determined by a distal end (12) whose horizontal projection, once joined to said element, is greater than the space it occupies in the box (3) and which, consequently, presses against the internal wall of said box (3), and wherein said distal end (12) presents means of attachment (14) which engage with the internal walls of the box (3), **characterized in that** said means of attachment (14) of each distal end (12) are disposed at different heights, determining, at least, two different heights of engagement on the internal wall of the box (3).

2. Flexible claw grip for fastening an element in a box, according to claim 1, **characterized in that** the means of attachment (14) are disposed in steps above each other.

3. Flexible claw grip for fastening an element in a box, according to claims 1 and 2, **characterized in that** the means of attachment (14) of the distal end (12) are disposed on respective sides of said distal end (12), forming parallel segments of means of attachment (14) with different levels of engagement, in each distal end (12) of the claw grip (1).

4. Flexible claw grip for fastening an element in a box, according to claim 3, **characterized in that** the means of attachment (14) of the distal end (12) provided in respective sides thereof are determined by respective folds (121) of the material constituting the claw at said distal end (12).

5. Flexible claw grip for fastening an element in a box, according to any of claims 1 to 4, **characterized in that** said claw grip (1) presents at least one longitudinal groove (10), in other words, following the longitudinal axis of the projection of each distal end (12) of the claw, said longitudinal groove (10) engaging with respective longitudinal protrusions (20) provided to such effect and coinciding with the element fixable (2), avoiding transversal movements between the distal end (12) of the claw grip (1) and the element fixable (2).

6. Flexible claw grip for fastening an element in a box, according to claim 5, **characterized in that** it presents two longitudinal grooves (10) in each distal end (12).

7. Flexible claw grip for fastening an element in a box, according to claim 6, **characterized in that** at least one of the walls of each longitudinal groove (10) is serrated.

8. Fastening system which comprises the flexible claw grip (1) described in any of claims 5 to 7 and an element fixable by the flexible claw grip (1), **characterized in that** the element presents longitudinal protrusions (20) engaged with the longitudinal grooves (10) of the claw grip (1), avoiding transversal and rotational movements between the distal end (12) of the claw grip (1) and the element fixable (2).

9. Fastening system, according to claim 8, **characterized in that** the fixable element presents, at least, one through hole (21) which gives access to the upper surface of the claw grip (1), when said claw grip (1) is joined to said element fixable (2), allowing for insertion of a tool and to press against said surface of the claw grip (1).

10. Fastening system, according to claim 9, **characterized in that** the through hole (21) is located in the side of the lower part of the element fixable (2), coinciding with the proximal zone of the distal end (12) of the claw grip (1), in other words, the most distal zone of the element fixable (2) which coincides with the claw grip (1).

11. Fastening system, according to claim 10, **characterized in that** it presents a through hole (21) coinciding with each one of the distal ends (12) of the claw grip (1).

## Patentansprüche

1. Flexibler Klauengriff zum Befestigen eines Elements in einem Kasten anwendbar zum Bereitstellen der Fixierung eines fixierbaren Elements (2) in einem Kasten (3) und konfiguriert auf der Basis von mindestens einem Teil mit mindestens einem flexiblen Teil, das durch ein distales Ende (12) bestimmt wird, dessen horizontaler Vorsprung, sobald es mit dem Element zusammengefügt wird, größer als der Raum ist, den es in dem Kasten (3) einnimmt und das folglich gegen die Innenwand des Kastens (3) drückt, und wobei das distale Ende (12) Befestigungseinrichtungen (14) aufweist, die in die Innenwand des Kastens (3) eingreifen, **dadurch gekennzeichnet, dass** die Befestigungsmittel (14) jedes distalen Endes (12) an unterschiedlichen Höhen angeordnet sind, die mindestens zwei unterschiedliche Höhen des Eingriffs der Innenwand des Kastens (3) festlegen.

2. Flexibler Klauengriff zum Befestigen eines Elements in einem Kasten nach Anspruch 1, **dadurch gekennzeichnet, dass** die Befestigungseinrichtungen (14) in Abstufungen übereinander angeordnet sind.

3. Flexibler Klauengriff zum Befestigen eines Elements in einem Kasten nach den Ansprüchen 1 und 2, **dadurch gekennzeichnet, dass** die Befestigungseinrichtungen (14) des distalen Endes (12) auf jeweiligen Seiten des distalen Endes (12) angeordnet sind, und dadurch, dass parallele Segmente der Befestigungseinrichtungen (14) mit unterschiedlichen Eingriffsgraden in jedem distalen Ende (12) des Klauengriffs (1) gebildet werden.

4. Flexibler Klauengriff zum Befestigen eines Elements in einem Kasten nach Anspruch 3, **dadurch gekennzeichnet, dass** die Befestigungseinrichtungen (14) des distalen Endes (12) auf den jeweiligen Seiten bereitgestellt sind, die durch jeweilige Falten (121) des Materials bestimmt werden, das die Klaue am distalen Ende (12) bildet.

5. Flexibler Klauengriff zum Befestigen eines Elements in einem Kasten nach einem der Ansprüche 1 bis 4, **dadurch gekennzeichnet, dass** der Klauengriff (1) mindestens eine Längsnut (10), mit anderen Worten, eine der Längsachse des Vorsprungs jedes distalen Endes (12) der Klaue folgende, aufweist, wobei die Längsnut (10) mit zugehörigen Längsvorsprüngen (20) eingreift, die hierzu bereitgestellt sind und mit dem fixierbaren Element (2) zusammenfallen, wodurch Querbewegungen zwischen dem distalen Ende (12) des Klauengriffs (1) und dem fixierbaren Element (2) verhindert werden,

6. Flexibler Klauengriff zum Befestigen eines Elements in einem Kasten nach Anspruch 5, **dadurch gekennzeichnet, dass** er zwei Längsnuten (10) in jedem distalen Ende (12) aufweist.

7. Flexibler Klauengriff zum Befestigen eines Elements in einem Kasten nach Anspruch 6, **dadurch gekennzeichnet, dass** mindestens eine der Wände jeder Längsnut (10) gezahnt ist.

8. Befestigungssystem, das den flexiblen Klauengriff (1) nach einem der Ansprüche 5 bis 7 umfasst, sowie ein Element, das durch den flexiblen Klauengriff (1) fixiert werden kann, **dadurch gekennzeichnet, dass** das Element Längsvorsprünge (20) aufweist, die mit den Längsnuten (10) des Klauengriffs (1) in Eingriff sind, wodurch Quer- und Drehbewegungen zwischen dem distalen Ende (12) des Klauengriffs (1) und dem fixierbaren Element (2) verhindert werden.

9. Befestigungssystem nach Anspruch 8, **dadurch gekennzeichnet, dass** das fixierbare Element mindestens einen Durchgang (21) aufweist, der einen Zugriff auf die obere Oberfläche des Klauengriffs (1) gewährt, wenn der Klauengriff (1) mit dem fixierbaren Element (2) zusammengefügt wird, wodurch das Einführen eines Werkzeugs und das Drücken gegen die Oberfläche des Klauengriffs (1) ermöglicht wird.

10. Befestigungssystem nach Anspruch 9, **dadurch gekennzeichnet, dass** der Durchgang (21) in der Seite des unteren Teils des fixierbaren Elements (2) angeordnet ist und mit der proximalen Zone des distalen Endes (12) des Klauengriffs (1) zusammenfällt, mit anderen Worten, dass die distale Zone des fixierbaren Elements (2) mit dem Klauengriff (1) zusammenfällt.

11. Befestigungssystem nach Anspruch 10, **dadurch gekennzeichnet, dass** es einen Durchgang (21) aufweist, der mit jedem der distalen Enden (12) des Klauengriffs (1) zusammenfällt.

## Revendications

1. Poignée à griffe flexible pour le serrage d'un élément dans une boîte, pouvant être appliquée pour fournir la fixation d'un élément fixable (2) dans une boîte (3), et configurée sur la base de, au moins, une partie avec, au moins, une partie flexible déterminée par une extrémité distale (12) dont la projection horizontale, une fois reliée audit élément, est plus grande que l'espace qu'elle occupe dans la boîte (3) et qui, donc, s'appuie contre la paroi interne de ladite boîte (3), et dans laquelle ladite extrémité distale (12) présente des moyens de fixation (14) qui s'engagent dans les parois internes de la boîte (3), **caractérisé en ce que** lesdits moyens de fixation (14) de chaque extrémité distale (12) sont disposés à différentes hauteurs, déterminant, au moins, deux différentes hauteurs d'engagement sur la paroi interne de la boîte (3).

2. Poignée à griffe flexible pour le serrage d'un élément dans une boîte, selon la revendication 1, **caractérisée en ce que** les moyens de fixation (14) sont disposés échelonnés les uns au-dessus des autres.

3. Poignée à griffe flexible pour le serrage d'un élément dans une boîte, selon les revendications 1 et 2, **caractérisée en ce que** les moyens de fixation (14) de l'extrémité distale (12) sont disposés sur les côtés respectifs de ladite extrémité distale (12), formant des segments parallèles de moyens de fixation (14) avec différents niveaux d'engagement, à chaque extrémité distale (12) de la poignée à griffe (1).

4. Poignée à griffe flexible pour le serrage d'un élément dans une boîte, selon la revendication 3, **caractérisée en ce que** les moyens de fixation (14) de l'extrémité distale (12) fournis aux côtés respectifs de celle-ci sont déterminés par des plis respectifs (121) du matériau constituant la griffe à ladite extrémité distale (12).

5. Poignée à griffe flexible pour le serrage d'un élément dans une boîte, selon l'une quelconque des revendications 1 à 4, **caractérisée en ce que** ladite poignée à griffe flexible (1) présente au moins une rainure longitudinale (10), en d'autres mots, suivant l'axe longitudinal de la projection de chaque extrémité distale (12) de la griffe, ladite rainure longitudinale (10) s'engageant avec des saillies longitudinales respectives (20) fournies à cet effet et coïncidant avec l'élément fixable (2), évitant les mouvements transversaux entre l'extrémité distale (12) de la poignée à griffe (1) et l'élément fixable (2).

6. Poignée à griffe flexible pour le serrage d'un élément dans une boîte, selon la revendication 5, **caractérisée en ce qu'**elle présente deux rainures longitudinales (10) à chaque extrémité distale (12).

7. Poignée à griffe flexible pour le serrage d'un élément dans une boîte, selon la revendication 6, **caractérisée en ce qu'**au moins l'une des parois de chaque rainure longitudinale (10) est dentelée.

8. Système de serrage qui comprend la poignée à griffe flexible (1) décrite selon l'une quelconque des revendications 5 à 7 et un élément fixable par la poignée à griffe flexible (1), **caractérisé en ce que** l'élément présente des saillies longitudinales (20) engagées dans les rainures longitudinales (10) de la poignée à griffe (1), évitant les mouvements transversaux et rotatifs entre l'extrémité distale (12) de la poignée à griffe (1) et l'élément fixable (2).

9. Système de serrage, selon la revendication 8, **caractérisé en ce que** l'élément fixable présente, au moins, un orifice traversant (21) qui donne accès à la surface supérieure de la poignée à griffe (1), lorsque ladite poignée à griffe (1) est reliée audit élément fixable (2), permettant l'insertion d'un outil et d'appuyer contre ladite surface de la poignée à griffe (1).

10. Système de serrage, selon la revendication 9, **caractérisé en ce que** l'orifice traversant (21) est situé sur le côté de la partie inférieure de l'élément fixable (2), coïncidant avec la zone proximale de l'extrémité distale (12) de la poignée à griffe (1), en d'autres mots, la zone la plus distale de l'élément fixable (2) qui coïncide avec la poignée à griffe (1).

11. Système de serrage, selon la revendication 10, **caractérisé en ce qu'**il présente un orifice traversant (21) coïncidant avec chacune des extrémités distales (12) de la poignée à griffe (1).
